# EUROPEAN PATENT SPECIFICATION

(11) **EP 2 613 393 B1**
(45) Date of publication and mention of the grant of the patent: **14.08.2019**
(21) Application number: 12150176.1
(22) Date of filing: 04.01.2012
(51) Int. Cl.: H01M 4/14, H01M 4/66, H01M 10/04, H01M 10/18

(54) **A bipolar lead acid battery and a method of manufacturing**
Bipolare Bleisäurebatterie und Herstellungsverfahren
Batterie au plomb-acide bipolaire et procédé de fabrication

(43) Date of publication of application: 10.07.2013
(73) Proprietor: Centurion Bipolair B.V., 6045 JA Roermond (NL)
(72) Inventor: Saakes, Machiel, 7316 BC Apeldoorn (NL); ten Have, Petrus Theodorus Jacobus Henricus, 5912 SM Venlo (NL); Coopmans, Johannes Gerardus Jozef, 5928 RN Venlo (NL)
(74) Representative: De Vries & Metman

(56) References cited:
- EP-A1- 2 131 439
- WO-A1-2005/048390
- WO-A2-98/40920
- US-A- 5 688 615
- US-A1- 2003 054 244
- US-A1- 2008 292 967
- Columbia Engineered Rubber, Inc.: "Dovetail O-Ring Gland (Groove) Design", Dayton, OH 45414 USA , 29 April 2010 (2010-04-29), XP002673587, Retrieved from the Internet: URL:http://www.columbiaerd.com/dovetail_se aldesign.html [retrieved on 2012-04-10]
- SAAKES M ET AL: "Bipolar lead-acid battery for hybrid vehicles", JOURNAL OF POWER SOURCES, ELSEVIER SA, CH, vol. 144, no. 2, 15 June 2005 (2005-06-15) , pages 536-545, XP004923550, ISSN: 0378-7753, DOI: 10.1016/J.JPOWSOUR.2004.11.057

## Description

The present invention relates to a bipolar lead acid battery comprising first and second terminal electrodes, a plurality of bipolar cells disposed between the first and second electrodes, separators for receiving an electrolyte which are disposed between neighbouring bipolar cells and between the first and second electrodes and respective neighbouring bipolar cells.

Such a bipolar lead acid battery is known in the field of rechargeable batteries. It is also known that bipolar lead acid batteries have advantages in respect of specific energy. In terms of rechargeable batteries there is a widespread use of lead acid batteries as traction batteries. Particularly for that use it is desired to have a high energy-to-weight ratio. The applicant intends to create bipolar lead acid batteries having a ratio above 50 Wh/kg. A disadvantage of the known bipolar lead acid batteries is a quickly decreasing performance over their lifetime.

EP 2 131 439 is related to a lead-acid battery which includes a positive electrode plate and an electrolyte solution and the positive electrode plate has a positive substrate bearing a tin dioxide layer on the surface thereof. Since the electrolyte solution has a specific gravity in a range of 1.250 to 1.500 at 20°C in a fully charged state, the potential in the vicinity of a positive current collector can be prevented from considerable temporary decrease at the time of high rate discharge and dissolution of the tin dioxide layer on the surface of the substrate and deterioration of the positive electrode plate can be prevented. Therefore, the lead-acid battery is provided with a long life.

US 2003/054244 is related to a bipolar battery having at least two battery cells comprising: a sealed housing, a negative end terminal, a positive end terminal, at least one biplate assembly arranged in a sandwich structure between the negative and positive end terminals, and a separator, including an electrolyte, arranged between each negative and positive electrode forming a battery cell. The biplate assembly is provided with an inner barrier of a hydrophobic material around the negative and the positive electrode, respectively, and an outer seal around the edge of each biplate. Each end terminal is provided with a terminal seal. The edge of each biplate is positioned close to the sealed housing to provide means to conduct heat from each biplate assembly to the ambient environment.

It is an object of the present invention to provide a bipolar lead acid battery having improved durability.

This is achieved by the battery according to the invention as defined in claim 1.

Experiments in respect of repeatedly charging and discharging of the battery according to the invention have shown that an elevated pressure above 20 N/cm² improves the durability of the battery in terms of discharge capacity significantly. On the other hand, an excessive pressure above 100 N/cm² leads to material problems of the battery. In order to withstand the relatively high pressure it is desired that porosity of the separators is maintained under pressure. The separators may be made of an absorptive glass mat which is highly porous and can absorb acid. Furthermore, an absorptive glass mat is highly resistant to battery acid, oxidation and heat, and can maintain its shape and strength after prolonged exposure of severe environmental conditions. In practice, the battery may be compressed to a pressure of 25 - 80 N/cm².

It is known in the prior art that an elevated compressing force, for example 5-10 N/cm² may lead to increased battery life in general. The battery according to the present invention, however, additionally demonstrates a much smaller negative gradient of battery capacity over its lifetime.

It is noted that upon manufacturing the battery by means of dry separators, the pressure may rise slightly afterwards when electrolyte is absorbed by the separators.

At least one of the bipolar cells may be made of a bipolar plate including an electrically conductive substrate sheet and metal foils which are laminated to opposite sides of the substrate sheet, whereas opposite sides of the bipolar plate are provided with a positive active material and a negative active material, respectively. Such a laminated bipolar plate is advantageous in terms of weight and durability. The active material is often provided by means of a curable paste which is applied into cavities of grids which are attached to the opposite sides of the bipolar plate.

The battery is adapted such and the shapes and dimensions of at least the separators and bipolar cells are such that they fit to each other and are mutually locked in a direction perpendicular to the stack of separators and bipolar cells in an uncompressed condition of the battery so as to be able to stack the bipolar cells and separators onto each other while keeping the stack stable. It is known that separators of bipolar batteries are very flexible in uncompressed condition. When the separators and bipolar cells fit to each other and are mutually locked in this condition these parts can be stacked in a stable manner upon assembly of the battery.

The separators and the bipolar cells fit to respective spacers, wherein the spacers are provided with interlocking members so as to enable stable stacking of the spacers in an uncompressed condition of the battery. The spacers are stackable whereas the bipolar cells and the separators are incorporated in the spacers. The spacers together form a part of the housing of the battery.

Each spacer comprises a frame member surrounding a central aperture within which the separator fits, and wherein an upper surface of the frame member is stepped down around the inner peripheral edge of the aperture for supporting the bipolar cell. The spacer may be mirror symmetrical such that the lower surface of the frame member is shaped similarly. This means that two adjacent spacers form a cavity in which the bipolar cell can be received.

The battery may be provided with sealing means at opposite contact surfaces for preventing leakage of electrolyte from the separators to the outside between the contact surfaces, wherein the sealing means comprises a flexible element located in a groove, which groove is shaped such that in an uncompressed condition of the battery the groove contains free space for partly receiving the flexible element under a compressed condition of the battery. This appears to provide a reliable sealing. In practice the groove extends circumferentially and envelopes the separators and/or the bipolar cells.

Preferably the sealing means is provided with a retainer for holding the flexible element in the groove before assembly, since this prevents the flexible element from falling out of the groove during assembly.

In practice, the groove can have a dovetail-shaped cross section so as to hold the flexible element in the groove before assembly, and the flexible element may be an O-ring.

Each bipolar cell may comprise a bipolar plate provided with positive and negative active material at opposite sides thereof, wherein each bipolar cell may be incorporated in adjacent stackable spacers, leaving open a cavity between a portion of a circumferential inner wall of the adjacent spacers and the bipolar plate including the positive and negative active material, and wherein portions of the separators are left away at the cavities, hence forming a common cavity in the battery. After assembly of the battery the common cavity can be filled with electrolyte and can be absorbed by the separators. Of course, the bipolar plates that end at the cavity should be provided with a sealing edge which avoids a conductive bridge at the peripheral edges of the bipolar plate. Preferably, the common cavity is located in the upper portion of the battery. This makes filling easily.

The cavity may be formed by an opening in the bipolar cell next to the bipolar plate as seen in frontal view of the bipolar cell. Such bipolar cells can be prepared in series whereas upon stacking to form the battery, a common cavity arises automatically.

The invention will hereafter be elucidated with reference to drawings showing embodiments of the invention very schematically.
Fig. 1 is an exploded, partly cut-away perspective view of an embodiment of the bipolar lead acid battery according to the invention.
Fig. 2 is a perspective top view of the embodiment of Fig. 1 in assembled condition.
Fig. 3 is an enlarged top view of the embodiment of Fig. 2.
Fig. 4 is a cross-sectional view along the line IV-IV in Fig. 3.
Fig. 5 is a similar view as Fig. 4, but illustrating a condition at an elevated compression force of the battery.
Fig. 6 is an enlarged view of a part of the assembled battery which is indicated by VI in Fig. 5.
Fig. 7 is a similar view as Fig. 1, showing an alternative embodiment.
Fig. 8 is a perspective view of the embodiment of Fig. 7 in assembled condition.
Fig. 9 is an enlarged side view of the embodiment of Fig. 8.
Fig. 10 is a cross-sectional view along the line X-X in Fig. 9.
Fig. 11 is a similar view as Fig. 10, but illustrating a condition at an elevated compression force of the battery.
Fig. 12 is an enlarged view of a part of the assembled battery which is indicated by XII in Fig. 11.
Figs. 13 and 14 are charts representing experimental results of two similar samples of batteries according to the invention, in which the batteries are charged and discharged during 150 consecutive cycles.
Fig. 15 is a similar chart as Figs. 13 and 14, but showing experimental results with a battery at a lower compression force.

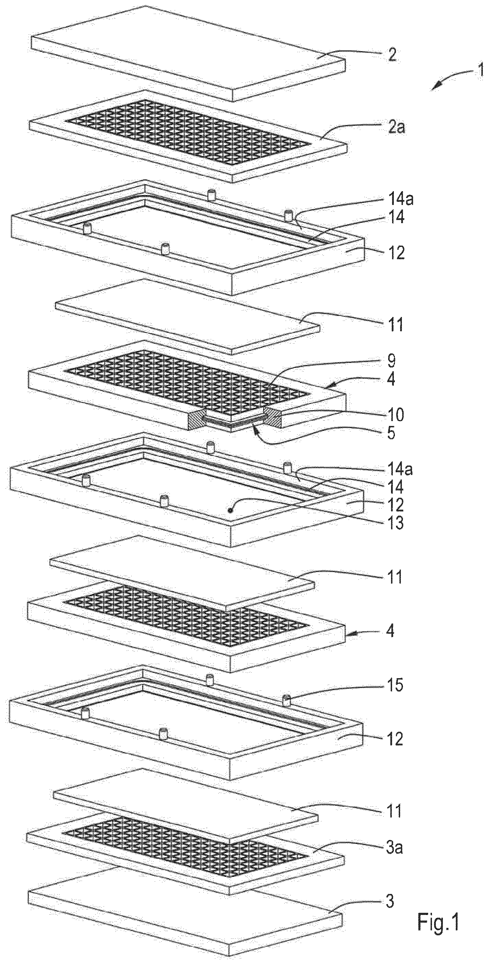

Fig. 1 shows parts of an embodiment of a bipolar lead acid battery 1 according to the invention before assembly. The battery comprises a first terminal electrode 2 and a second terminal electrode 3. The terminal electrodes 2, 3 may be made of aluminium plates or alternative conductive materials. It is known that in bipolar batteries the electrical current is collected perpendicular to the plane of the terminal electrodes 2, 3. The terminal electrodes 2, 3 can be connected to an electrical source (not shown) for charging the battery 1 or an electrical load for discharging the battery 1.

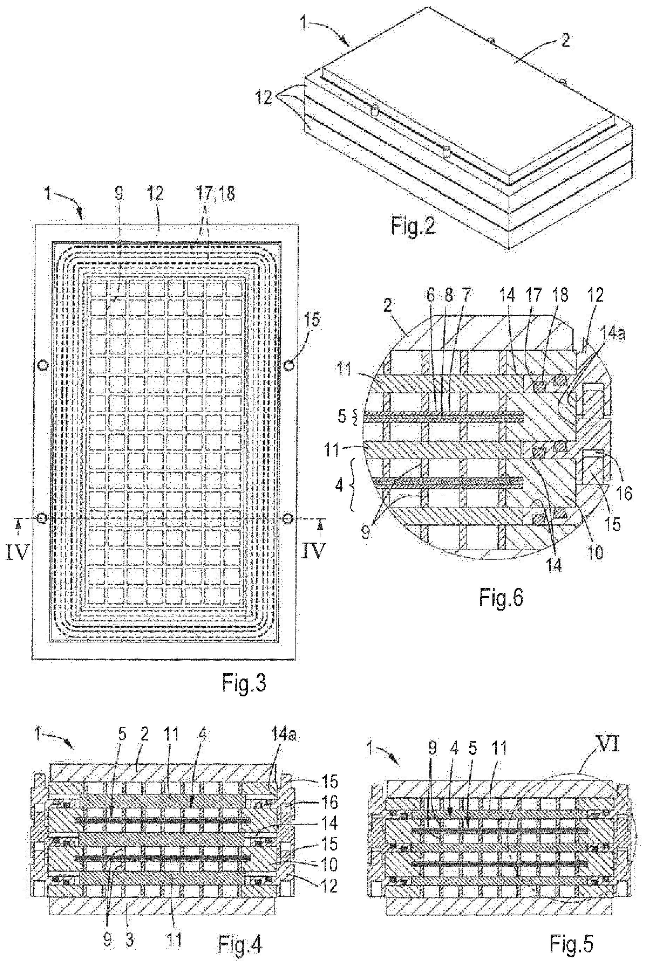

In the embodiment as shown two bipolar cells 4 are disposed between the first and second terminal electrodes 2, 3. The number of bipolar cells 4 defines the voltage level of the battery 1; in practice more than two bipolar cells 4 will be applied. The bipolar cells 4 are depicted as units or plates. Each of the bipolar cells 4 comprises a bipolar plate 5 which is provided with positive and negative active material at its respective opposite sides. A possible manner of manufacturing a bipolar cell is described in EP 2 157 641 and EP 2 157 642. The bipolar cell 4 in the embodiment of the battery 1 as shown in Fig. 1 is manufactured in a similar way. The bipolar plate 5 is made by laminating metal-containing foils 6, 7 to opposite sides of an electrically conductive central substrate sheet 8, see Fig. 6. The opposite sides of the bipolar plate 5 are provided with respective grids 9. The grid 9 at one side of the bipolar cell 4 is provided with a positive active material and the grid 9 at the opposite side is provided with a negative active material. The positive active material may be a positive paste, for example a paste that contains lead oxide, whereas the negative active material may be a negative paste, for example a paste that contains lead.

The grids 9 may be attached to the bipolar plate 5 by means of laminating, injection moulding, transfer moulding or an alternative method. In practice the grids 9 are made of a nonconductive material, for example a polymer. Figs. 4-6 show that the bipolar plate 5 extends beyond the peripheral edges of the grids 9. Furthermore, the bipolar cell 4 is provided with a sealing cell edge 10 around the edges of the bipolar plate 5. This avoids a conductive bridge between the positive and negative electrodes or foils 6, 7 at the peripheral edges of the bipolar plate 5. The sealing cell edge 10 is made of a nonconductive material, for example a polymer. In the embodiment as shown, the sealing cell edge 10 not only covers the peripheral edges of the bipolar plate 5, but also forms a frame around the peripheral edges of the grids 9. The sealing cell edge 10 may be rigid or slightly flexible.

Fig. 1 shows grid plates 2a, 3a which are adjacent to the first and second terminal electrodes 2, 3, respectively. In practice the grid plates 2a, 3a are provided with respective pastes of positive and negative active material, as well. In Fig. 1 the grid plates 2a, 3a are shown separately from the first and second terminal electrodes 2, 3, but they may be integrated.

The battery 1 is provided with separators 11, which are disposed between the neighboring bipolar cells 4, between the first terminal electrode 2 and the neighbouring bipolar cell 4, and between the second terminal electrode 3 and the neighbouring bipolar cell 4. Under operating conditions of the battery 1 the separators 11 are filled with an electrolyte or acid. It is clear that the sealing cell edge 10 prevents the electrolyte from migrating to the peripheral edges of the bipolar plate 5. In practice the compressible separator 11 is made of a glass mat and often indicated by AGM or absorptive glass mat.

Fig. 1 shows that the battery 1 also comprises spacers 12 which have several functions. The spacer 12 is a rectangular frame member, which is preferably rigid. It has a central aperture 13 that defines a substantially rectangular opening through the frame member. The spacer 12 does not conduct electrical current and may be made of a polymer, for example polypropylene. An upper surface of the frame member is stepped down around the inner peripheral edge of the aperture 13. This defines a cell support 14 for supporting the bipolar cell 4, as illustrated in Figs. 4-6. The cell support 14 projects into the aperture 13 from an inner edge 14a of the frame member. A lower surface of the frame member is adapted similarly as the upper surface, such that each spacer 12 comprises two cell supports 14 facing away from each other. The spacer 12 is provided with interlocking members in the form of pins 15 and corresponding pin holes 16, in which the pins 15 fit. The pins 15 and pin holes 16 are located such that upon assembling the battery 1 the parts can be stacked in a simple manner. Fig. 4 illustrates an assembled condition in which the pins 15 are partly received in the pin holes 16. Fig. 5 illustrates a compressed condition in which the stack is compressed and the pins 15 penetrate further in the pin holes 16.

Each separator 11 and the central aperture 13 of the spacer 12 are dimensioned such that upon stacking the parts of the battery 1, the separator 11 fits within the peripheral edge of the aperture 13. Fig. 4 illustrates this condition, in which it can be seen that the separator 11 extends beyond the peripheral edges of grids 9, but it is still slightly smaller than the aperture 13.

The bipolar cells 4 are stacked with the separators 11 between the terminal electrodes 2, 3. The positive side of each bipolar plate 5 faces the negative side of the adjacent bipolar plate 5.

Upon stacking the parts of the battery 1, the thickness of the separator 11 is larger than the distance between the opposite cell supports 14 of the spacer 12, see Fig. 4. Due to the compressibility of the separator 11 the stack can be compressed by moving the terminal electrodes 2, 3 to each other, as illustrated in Fig. 5. Other parts, i.e. bipolar cells 4, spacers 12 and terminal electrodes 2, 3 should be able to withstand the compressive forces, as well. According to the invention the battery 1 is compressed to a pressure of 25 - 80 N/cm². In order to withstand the relatively high compression force but maintaining its absorption capacity, the separator 11 can be made of a mat having a mixture of glass and plastic fibres. Due to the high compression force the bipolar cells 4 including the pastes contact the separators 11 firmly which improves the battery performance.

It is noted that the pins 15 and pin holes 16 are not necessarily related to a battery 1 having an elevated compression force. In general terms, a bipolar lead acid battery may comprise first and second terminal electrodes, a plurality of bipolar cells disposed between the first and second electrodes, separators for absorbing an electrolyte which are disposed between neighbouring bipolar cells and between the first and second electrodes and respective neighbouring bipolar cells, wherein the battery is adapted such and the shapes and dimensions of at least the separators and bipolar cells are such that they fit to each other and are mutually locked in a direction perpendicular to the stack of separators 11 and bipolar cells 4 in an uncompressed condition of the battery so as to be able to stack the bipolar cells and separators onto each other while keeping the stack stable. This provides the opportunity to interlock the separators and the bipolar cells upon assembling and before compressing the battery. This makes the bipolar cells 4 and the separators 11 stackable in a simple manner, in particular in case of applying compressible separators 11 which are highly flexible in an uncompressed condition. In practice a bipolar battery according to the invention is built-up by stacking separators 11 and bipolar cells 4 alternately onto the laying second terminal electrode 3. Without interlocking means 15, 16 the stack becomes unstable when the stack grows in height upon assembly. Due to interlocking means 15, 16 the bipolar cells 4 and the separators 11 are mutually locked in a direction perpendicular to the stack. In a direction parallel to the stack, however, the bipolar cells 4 and the separators 11 are mutually displaceable in order to allow compression of the stack.

In the embodiment of the battery as shown in Figs. 1-6 each of the bipolar cells 4 has a peripheral sealing cell edge 10, which avoids a conductive bridge between the positive and negative electrodes or foils 6, 7 at the peripheral edges of the bipolar plate 5, on the one hand, and has a peripheral outer wall which fits to a peripheral inner edge of the spacer 12, indicated by 14a, on the other hand. In the embodiment as shown the spacers 12 are stackable by means of its pins 15 and pin holes 16, but for stable stacking it is also conceivable that this function of the spacers 12 is integrated in the sealing cell edge 10 (not shown). In this case the sealing cell edge 10 could be provided with both interlocking members and sealing means for preventing electrolyte migrating from the separators 11 to the outside.

In the embodiment as shown the bipolar cells 4 are block-shaped and fit within a frame portion of the spacer 12. Since each spacer 12 has similar frame portions at its opposite sides, each bipolar cell 4 can be incorporated by a cavity which is defined by inner walls of two adjacent spacers 12. The inner walls are formed by the opposite cell supports 14 and the inner edges 14a of the adjacent spacers 12. In practice the sealing cell edge 10 of the bipolar cell 4 is clamped between the cell supports 14 of the adjacent spacers 12.

The battery 1 is provided with sealing means in the form of an O-ring 17 which is present in a groove 18 in the frame member at the cell support 14 of the spacer 12, see Fig. 6. The groove 18 extends in circumferential direction of the bipolar cell 4. The O-ring 17 prevents leakage of electrolyte from the separator 11 to the outside between surfaces where the sealing cell edge 10 of the bipolar cell 4 contacts the spacer 12. The groove 18 has a dovetail-shaped cross section, which serves to receive a portion of the O-ring 17 under compression. Furthermore, this groove shape serves to retain the O-ring 17 in the groove 18 during handling the spacer 12 upon assembling the battery 1. The O-ring is flexible and may be made of a thermoplastic material.

It is noted that the O-ring 17 and dovetail-shaped cross section of the corresponding groove 18 are not necessarily related to a battery 1 having an elevated compression force.

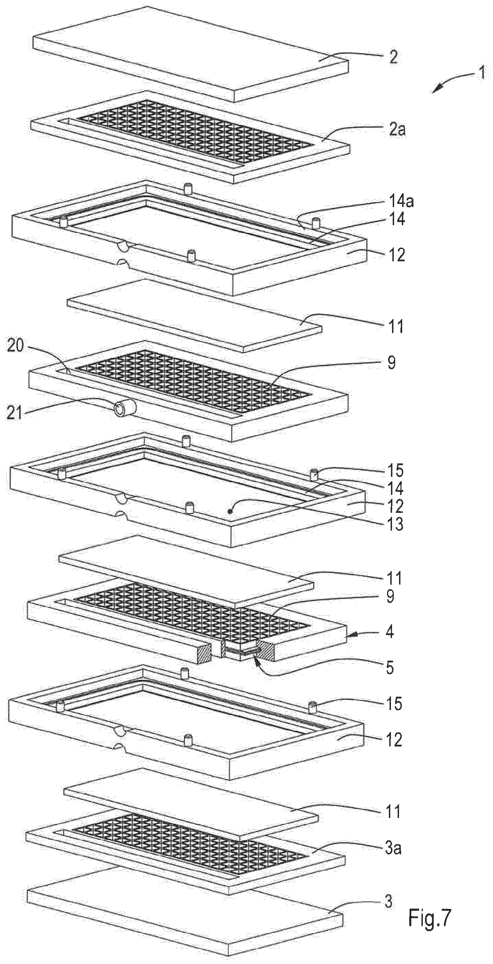

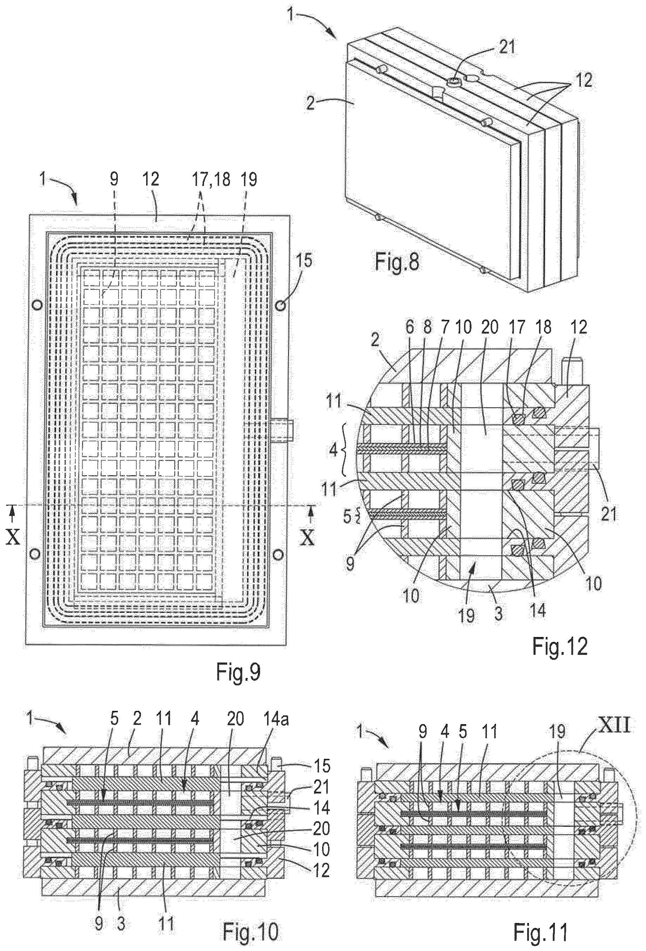

Fig. 7 shows an alternative embodiment of the bipolar battery 1, which differs from the embodiment as described hereinbefore and shown in Figs. 1-7, in that a common cavity 19 is left open between the adjacent spacers 12 and the bipolar cells 4 and the separators 11, see Fig. 12. Parts that are similar to corresponding parts in Figs. 1-6 are indicated by identical reference signs. In the embodiment as shown in Fig. 12 the common cavity 19 of the entire battery 1 is defined by openings 20 in the sealing cell edges 10 of the respective bipolar cells 4, upper sides of the separators 11, portions of the terminal electrodes 2, 3 and inner walls of the spacers 12. Due to the openings 20 in the respective bipolar cells 4, the frontal surface of the bipolar cell 4 within the aperture 13 of the spacer 12 is smaller than the frontal surface of the aperture 13. Similarly, the frontal surface of the respective separators 11 corresponds with the effective frontal surface of the bipolar cell 4 within the aperture 13. The openings 20 in the bipolar cells 4 and the space between the separators 11 and the inner wall of the spacer 12 together form the common cavity 19 of the battery 1.

Fig. 7 shows that one of the bipolar cells 4 is provided with a valve opening 21 for filling the electrolyte after assembly of the battery 1. Due to the presence of the common cavity 19 the electrolyte can freely flow to the respective separators 11 and be absorbed therein. In practice electrolyte can be forced into the separators 11 by filling under vacuum conditions (not shown). It is noted that a bipolar cell 4 including an integrated cavity 19 as described hereinbefore can also be applied in a battery which is not compressed to a pressure above 20 N/cm².

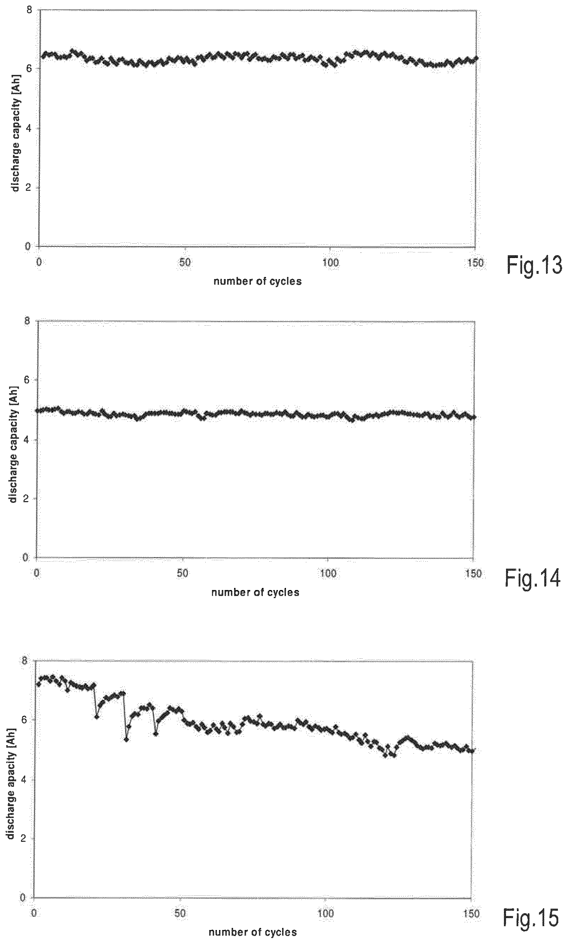

In order to illustrate the functioning of the bipolar battery according to the invention, similar samples of batteries 1 were constructed and tested. Test cycles have been performed in the following manner. First, the battery was charged at 2 A at a maximum voltage of 14.7 V. After the electrical current decreases below 2 A the battery was charged at 0.36 A without voltage cut-off. Discharging was performed at 2 A at a voltage cut-off at 10.2 V. Figs. 13 and 14 show the results of two samples of batteries according to the invention within a period of 150 cycles of charging and discharging. These figures show the measured discharge capacity per cycle. Both batteries were compressed to a pressure of about 40 N/cm². The absolute level of the discharge capacity as shown in Fig. 13 is slightly higher than the discharge capacity as shown in Fig. 14, which is caused by spread in sample-to-sample battery performance due to manually manufacturing. Such a spread will be reduced in case of series production.

In order to illustrate the effect of pressure on the performance of discharge capacity Fig. 15 shows the experimental results of similar measurements of an embodiment of a battery which is compressed to a pressure of about 10 N/cm². Figs. 13 and 14 clearly show that the negative gradient of discharge capacity over lifetime is much smaller in case of higher compression force.

From the foregoing it will be clear that the battery according to the invention shows an improvement of durability in respect of discharge capacity.

The invention is not limited to the embodiments shown in the drawings and described hereinbefore, which may be varied in different manners within the scope of the claims.

## Claims

1. A bipolar lead acid battery (1) comprising first and second terminal electrodes (2, 3), a plurality of bipolar cells (4) disposed between the first and second electrodes (2, 3), separators (11) for receiving an electrolyte which are disposed between neighboring bipolar cells (4) and between the first and second electrodes (2, 3) and respective neighboring bipolar cells (4), wherein the battery (1) is compressed from an uncompressed condition to a compressed condition due to moving the first and second terminal electrodes (2, 3) to each other,
wherein the separators (11) and the bipolar cells (4) are incorporated in and fit to respective spacers (12),
wherein the separators (11) are compressible and the battery (1) is compressed to a pressure of 25 - 80 N/cm² **characterized in that** the spacers (12) are provided with interlocking members (15, 16) for mutually locking the spacers in a direction perpendicular to the stack of separators and bipolar cells in the uncompressed condition of the battery (1) so as to enable stable stacking of the spacers (12) in the uncompressed condition of the battery (1),
wherein the spacers (12) are mutually displaceable in a direction parallel to the stack of separators (11) and bipolar cells (4) in the uncompressed condition, wherein each spacer (12) comprises a frame member surrounding a central aperture (13) within which the separator (11) fits, and wherein an upper surface of the frame member is stepped down around the inner peripheral edge of the aperture (13) hence forming a cell support (14) for supporting the bipolar cell (4), wherein a lower surface of the frame member is adapted similarly as the upper surface, such that each spacer (12) comprises two cell supports (14) facing away from each other, wherein the spacers (12), the separators (11) and the bipolar cells (4) are adapted such that upon stacking them,, i.e. in the uncompressed condition, the thickness of the separator (11) is larger than the distance between the opposite cell supports (14) of the spacer (12).

2. A battery (1) according to claim 1, wherein at least one of the bipolar cells (4) is made of a bipolar plate (5) including an electrically conductive substrate sheet (6) and metal foils (7, 8) which are laminated to opposite sides of the substrate sheet (6), whereas opposite sides of the bipolar plate (5) are provided with a positive active material and a negative active material, respectively.

3. A battery (1) according to one of the preceding claims, wherein the battery (1) is provided with sealing means (17, 18) at opposite contact surfaces (14, 10) for preventing leakage of electrolyte from the separators (11) to the outside between the contact surfaces, wherein the sealing means (17, 18) comprises a flexible element (17) located in a groove (18), which groove (18) is shaped such that in an uncompressed condition of the battery (1) the groove (18) contains free space for partly receiving the flexible element (17) under a compressed condition of the battery (1).

4. A battery (1) according to claim 3, wherein the sealing means (17, 18) is provided with a retainer for holding the flexible element (17) in the groove (18) before assembly.

5. A battery (1) according to claim 4, wherein the groove (18) has a dovetail-shaped cross section so as to hold the flexible element (17) in the groove (18) before assembly.

6. A battery (1) according to one of the claims 3-5, wherein the flexible element is an O-ring (17).

7. A battery (1) according to one of the claims 3-6, wherein the groove (18) is provided in the spacer (12), preferably located at the frame member where the bipolar cell (4) contacts the spacer (12).

8. A battery (1) according to one of the preceding claims, wherein each bipolar cell (4) comprises a bipolar plate provided with positive and negative active material at opposite sides thereof, wherein each bipolar cell is incorporated in adjacent stackable spacers (12), leaving open a cavity (20) between a portion of a circumferential inner wall of the adjacent spacers (12) and the bipolar plate (5) including the positive and negative active material, and wherein portions of the separators (4) are left away at the cavities (20), hence forming a common cavity (19) in the battery (1).

9. A battery (1) according to claim 8, wherein the cavity is formed by an opening (20) in the bipolar cell (4) next to the bipolar plate (5) as seen in frontal view of the bipolar cell (4).

## Patentansprüche

1. Eine bipolare Blei-Säure-Batterie (1), aufweisend eine erste und eine zweite Anschlusselektrode (2, 3), eine Mehrzahl von bipolaren Zellen (4), die zwischen der ersten und der zweiten Elektrode (2, 3) angeordnet sind, Separatoren (11) zum Aufnehmen eines Elektrolyts, die zwischen benachbarten bipolaren Zellen (4) und zwischen der ersten und der zweiten Elektrode (2, 3) und jeweiligen benachbarten bipolaren Zellen (4) angeordnet sind, wobei die Batterie (1) aufgrund eines Bewegens der ersten und der zweiten Anschlusselektrode (2, 3) zueinander aus einem unkomprimierten Zustand in einen komprimierten Zustand komprimiert wird,
wobei die Separatoren (11) und die bipolaren Zellen (4) in jeweilige Abstandshalter (12) integriert und eingepasst sind,
wobei die Separatoren (11) komprimierbar sind und die Batterie (1) auf einen Druck von 25 bis 80 N/cm² komprimiert wird, **dadurch gekennzeichnet, dass** die Abstandshalter (12) mit Verriegelungselementen (15, 16) zum gegenseitigen Verriegeln der Abstandshalter in einer Richtung senkrecht zu dem Stapel von Separatoren und bipolaren Zellen im unkomprimierten Zustand der Batterie (1) vorgesehen sind, um ein stabiles Stapeln der Abstandshalter (12) im unkomprimierten Zustand der Batterie (1) zu ermöglichen,
wobei die Abstandshalter (12) im unkomprimierten Zustand in einer Richtung parallel zu dem Stapel von Separatoren (11) und bipolaren Zellen (4) gegeneinander verschiebbar sind, wobei jeder Abstandshalter (12) ein Rahmenelement aufweist, das eine zentrale Öffnung (13) umgibt, in die der Separator (11) passt, und wobei eine obere Fläche des Rahmenelements um den Innenumfangsrand der Öffnung (13) nach unten gestuft ist, wodurch eine Zellenstütze (14) zum Abstützen der bipolaren Zelle (4) gebildet wird, wobei eine untere Fläche des Rahmenelements ähnlich wie die obere Fläche angepasst ist, so dass jeder Abstandshalter (12) zwei Zellenstützen (14) aufweist, die voneinander abgewandt sind, wobei die Abstandshalter (12), die Separatoren (11) und die bipolaren Zellen (4) derart angepasst sind, dass beim Stapeln dieser, d.h. im unkomprimierten Zustand, die Dicke des Separators (11) größer als die Entfernung zwischen den entgegengesetzten Zellenstützen (14) des Abstandshalters (12) ist.

2. Eine Batterie (1) gemäß Anspruch 1, wobei mindestens eine der bipolaren Zellen (4) aus einer bipolaren Platte (5) hergestellt ist, die ein elektrisch leitfähiges Substratblatt (6) und Metallfolien (7, 8) aufweist, die auf entgegengesetzte Seiten des Substratblatts (6) laminiert sind, wohingegen entgegengesetzte Seiten der bipolaren Platte (5) mit einem positiven aktiven Material bzw. einem negativen aktiven Material versehen sind.

3. Eine Batterie (1) gemäß einem der vorhergehenden Ansprüche, wobei die Batterie (1) an gegenüberliegenden Kontaktflächen (14, 10) mit Dichtungsmitteln (17, 18) versehen ist, zum Verhindern des Austretens von Elektrolyt aus den Separatoren (11) nach außen zwischen den Kontaktflächen, wobei das Dichtungsmittel (17, 18) ein flexibles Element (17) aufweist, das in einer Aussparung (18) angeordnet ist, wobei die Aussparung (18) derart geformt ist, dass die Aussparung (18) in einem unkomprimierten Zustand der Batterie (1) freien Raum zum teilweisen Aufnehmen des flexiblen Elements (17) in einem komprimierten Zustand der Batterie (1) enthält.

4. Eine Batterie (1) gemäß Anspruch 3, wobei das Dichtungsmittel (17, 18) mit einer Halterung zum Halten des flexiblen Elements (17) in der Aussparung (18) vor dem Montieren versehen ist.

5. Eine Batterie (1) gemäß Anspruch 4, wobei die Aussparung (18) einen schwalbenschwanzförmigen Querschnitt hat, um das flexible Element (17) vor dem Montieren in der Aussparung (18) zu halten.

6. Eine Batterie (1) gemäß einem der Ansprüche 3 bis 5, wobei das flexible Element ein O-Ring (17) ist.

7. Eine Batterie (1) gemäß einem der Ansprüche 3 bis 6, wobei die Aussparung (18) in dem Abstandshalter (12) vorgesehen ist, vorzugsweise an dem Rahmenelement angeordnet, wo die bipolare Zelle (4) den Abstandshalter (12) kontaktiert.

8. Eine Batterie (1) gemäß einem der vorhergehenden Ansprüche, wobei jede bipolare Zelle (4) eine bipolare Platte aufweist, die an entgegengesetzten Seiten davon mit positivem und negativem aktiven Material versehen ist, wobei jede bipolare Zelle in benachbarte stapelbare Abstandshalter (12) integriert ist, wobei ein Hohlraum (20) zwischen einem Abschnitt einer Umfangsinnenwand der benachbarten Abstandshalter (12) und der bipolaren Platte (5), die das positive und das negative Material aufweist, offen gelassen wird, und wobei Abschnitte der Separatoren (4) an den Hohlräumen (20) weggelassen sind, wodurch ein gemeinsamer Hohlraum (19) in der Batterie (1) gebildet wird.

9. Eine Batterie (1) gemäß Anspruch 8, wobei in einer Frontansicht der bipolaren Zelle (4) betrachtet der Hohlraum durch eine Öffnung (20) in der bipolaren Zelle (4) neben der bipolaren Platte (5) ausgebildet ist.

## Revendications

1. Batterie au plomb-acide bipolaire (1) comprenant des première et seconde électrodes à bornes (2, 3), une pluralité de cellules bipolaires (4) disposées entre les première et seconde électrodes (2, 3), des séparateurs (11) destinés à recevoir un électrolyte qui sont disposés entre des cellules bipolaires (4) voisines et entre les première et seconde électrodes (2, 3) et des cellules bipolaires voisines (4) respectives, dans laquelle la batterie (1) est comprimée d'une condition non comprimée à une condition comprimée en raison d'un déplacement des première et seconde électrodes à bornes (2, 3) l'une vers l'autre,
dans laquelle les séparateurs (11) et les cellules bipolaires (4) sont incorporés dans et épousent les espaceurs (12) respectifs,
dans laquelle les séparateurs (11) sont compressibles et la batterie (1) est comprimée à une pression de 25 à 80 N/cm² **caractérisée en ce que** les espaceurs (12) sont pourvus d'organes de verrouillage mutuels (15, 16) destinés à verrouiller mutuellement les espaceurs dans une direction perpendiculaire à l'empilement de séparateurs et de cellules bipolaires dans la condition non comprimée de la batterie (1) de manière à permettre un empilement stable des espaceurs (12) dans la condition non comprimée de la batterie (1),
dans laquelle les espaceurs (12) peuvent être mutuellement déplacés dans une direction parallèle à l'empilement de séparateurs (11) et de cellules bipolaires (4) dans la condition non comprimée, dans laquelle chaque espaceur (12) comprend un organe formant cadre entourant une ouverture centrale (13) à l'intérieur duquel est épousé le séparateur (11), et dans laquelle une surface supérieure de l'organe formant cadre descend par palier autour du bord périphérique interne de l'ouverture (13), formant donc un support de cellule (14) destiné à supporter la cellule bipolaire (4), dans laquelle une surface inférieure de l'organe formant cadre est adaptée de façon similaire à la surface supérieure, de telle sorte que chaque espaceur (12) comprenne deux supports de cellule (14) en regard l'un de l'autre à distance, dans laquelle les espaceurs (12), les séparateurs (11) et les cellules bipolaires (4) sont adaptés de telle sorte qu'en les empilant, c-à-d dans la condition non comprimée, l'épaisseur du séparateur (11) est plus grande que la distance entre les supports de cellule (14) opposés de l'espaceur (12).

2. Batterie (1) selon la revendication 1, dans laquelle au moins l'une des cellules bipolaires (4) est constituée d'une plaque bipolaire (5) incluant une feuille de substrat électriquement conductrice (6) et des feuillards métalliques (7, 8) qui sont stratifiés sur des côtés opposés de la feuille de substrat (6), tandis que des côtés opposés de la plaque bipolaire (5) sont pourvus d'un matériau actif positif et d'un matériau actif négatif, respectivement.

3. Batterie (1) selon l'une des revendications précédentes, dans laquelle la batterie (1) est pourvue d'un moyen d'étanchéité (17, 18) au niveau de surfaces de contact opposées (14, 10) pour empêcher une fuite d'électrolyte des séparateurs (11) vers l'extérieur entre les surfaces de contact, dans laquelle le moyen d'étanchéité (17, 18) comprend un élément flexible (17) situé dans une rainure (18), laquelle rainure (18) est conformée de telle sorte que dans une condition non comprimée de la batterie (1), la rainure (18) renferme un espace libre destiné à recevoir en partie l'élément flexible (17) sous une condition comprimée de la batterie (1).

4. Batterie (1) selon la revendication 3, dans laquelle le moyen d'étanchéité (17, 18) est pourvu d'un organe de retenue destiné à tenir l'élément flexible (17) dans la rainure (18) avant assemblage.

5. Batterie (1) selon la revendication 4, dans laquelle la rainure (18) a une section transversale en forme de queue-d'aronde de manière à tenir l'élément flexible (17) dans la rainure (18) avant assemblage.

6. Batterie (1) selon l'une des revendications 3 à 5, dans laquelle l'élément flexible est un joint torique (17).

7. Batterie (1) selon l'une des revendications 3 à 6, dans laquelle la rainure (18) est ménagée dans l'espaceur (12), de préférence située au niveau de l'organe formant cadre où la cellule bipolaire (4) vient en contact de l'espaceur (12).

8. Batterie (1) selon l'une des revendications précédentes, dans laquelle chaque cellule bipolaire (4) comprend une plaque bipolaire pourvue d'un matériau actif positif et négatif au niveau de côtés opposés de celle-ci, dans laquelle chaque cellule bipolaire est incorporée dans des espaceurs empilables adjacents (12), laissant ouverte une cavité (20) entre une portion d'une paroi interne circonférentielle des espaceurs adjacents (12) et la plaque bipolaire (5) incluant le matériau actif positif et négatif, et dans laquelle des portions des séparateurs (4) sont délaissées au niveau des cavités (20), formant donc une cavité commune (19) dans la batterie (1).

9. Batterie (1) selon la revendication 8, dans laquelle la cavité est formée par une ouverture (20) dans la cellule bipolaire (4) près de la plaque bipolaire (5) telle qu'on la voit dans une vue de face de la cellule bipolaire (4).
